# EUROPÄISCHE PATENTANMELDUNG

(11) **EP 2 045 448 A1**
(43) Veröffentlichungstag der Anmeldung: **08.04.2009**
(21) Anmeldenummer: 07019494.9
(22) Anmeldetag: 04.10.2007
(51) Int. Cl.: F01D 25/30, F01N 1/08, F23J 13/00, F02C 7/24

(54) **Geräuscharme Abgasanlage**

(71) Anmelder: SIEMENS AKTIENGESELLSCHAFT, 80333 München (DE)
(72) Erfinder: Hetzel, Roland, 91090 Effeltrich (DE)

(57) **Zusammenfassung**

Die Erfindung betrifft eine Abgasanlage (1) umfassend einen Abgaskanal (7) mit einem Diffusor (10), einem Eintrittsbereich (11), einem Austrittsbereich (12) und einer Längsachse (21),wobei ein vom Eintrittsbereich (11) des Abgaskanals (7) in den Abgaskanal (7) hineinragender aerodynamischer Körper (13) im Wesentlichen auf der Längsachse (21) angeordnet und derart ausgestaltet ist, dass beim Betrieb der Abgasanlage (1) die Entstehung niederfrequenten Schalls vermieden wird. Die Erfindung betrifft auch den Betrieb einer Abgasanlage (1).

## Beschreibung

Die Erfindung betrifft eine geräuscharme Abgasanlage sowie ein Verfahren zum Betrieb einer geräuscharmen Abgasanlage.

Abgassysteme von Gasturbinenanlagen (Single Cycle) können niederfrequenten Schall (4 Hz bis 32 Hz) erheblicher Intensitäten erzeugen. Die Folge sind starke Pulsationen im Abgaskamin und Schwingungsanregungen benachbarter Gebäude durch Luftdruckschwankungen (Schall). Der niederfrequente Schall kann bei Personen, die sich in diesen Gebäuden aufhalten, zu physischen und psychischen Belastungen führen. Obwohl Infraschall (unter 16 Hz) zu keiner ausgeprägten Hörempfindung führt, wird er häufig als Pulsation und Vibration wahrgenommen und kann zu Ohrendruck, Ermüdung und Kopfschmerzen, mitunter auch zu Unsicherheits- und Angstgefühlen bzw. zur Herabsetzung der Atemfrequenz führen. Oberhalb 16 Hz (bis 60Hz) ist der Schall prinzipiell hörbar und wird häufig als Schwebungen wahrgenommen. Diese Wahrnehmungen sind begleitet von Dröhn- oder Druckgefühlen im Kopf.

Einzelne Ländervorschriften limitieren bereits neben den üblichen Schallgrenzwerten auch den niederfrequenten Schallanteil und dies wird vermutlich zukünftig bedingt durch die negativen Auswirkungen noch zunehmen.

Bisher hat man versucht, die negativen Erscheinungen durch nachträglich eingebaute Strömungsgleichrichter, Umlenkungsbleche und/oder absorbierende Auskleidungen der 90°-Umlenkung zwischen Abgaskanal und Kamin zu minimieren. Um niederfrequente Lärmemissionen zu reduzieren, hat man Helmholtz-Resonatoren im Übergangsbereich zwischen Abgaskanal und Kamin vorgesehen, wie dies beispielsweise in der EP 1 213 538 erwähnt ist. Die Wirkung eines Helmholtz-Resonators ist aber schmalbandig und eliminiert nicht alle tiefen Frequenzen. Oft wurde auch schon versucht durch den zusätzlichen Einbau oder Anbau von "dicken" Schalldämpferkulissen das Problem zu lösen. Alle Maßnahmen bringen jedoch nicht den gewünschten Erfolg, weil sie entweder nicht die Ursache beseitigen oder technisch nicht dauerhaft umsetzbar sind bzw. geringe Standzeiten haben. Einige Fälle sind bekannt, in denen die Kamine zurückgebaut wurden bzw. die Anlagen stillgelegt und/oder zurückgebaut werden mussten.

Aufgabe der Erfindung ist es daher, eine geräuscharme Abgasanlage sowie ein Verfahren zum Betrieb einer geräuscharmen Abgasanlage vorzuschlagen, die die oben genannten Nachteile überwindet.

Diese Aufgabe wird erfindungsgemäß gelöst durch die Merkmale der Patentansprüche 1 und 15.

Weitere vorteilhafte Ausführungsformen sind in den Unteransprüchen genannt.

Die erfinderische Abgasanlage umfasst einen aerodynamisch optimierten Strömungskanal, der die Entstehung niederfrequenten Schalls verhindern kann. Die erfindungstechnischen Merkmale zielen im Wesentlichen auf eine Vergleichmäßigung der Strömung und eine Reduzierung der Strömungsgeschwindigkeiten. Damit wird kinetische und akustische Energie aus dem System genommen.

Die erfindungsgemäße Abgasanlage zur Unterdrückung niederer Schallfrequenzen ist gekennzeichnet durch einen vom Eintrittsbereich des Abgaskanals in den Abgaskanal hineinragenden aerodynamischen Körper, der im Wesentlichen auf der Längsachse des Abgaskanals angeordnet und derart ausgestaltet ist, dass beim Betrieb der Abgasanlage die Entstehung niederfrequenten Schalls vermieden wird. Die Bereiche höchster turbulenter kinetischer Energie werden durch den aerodynamisch gestalteten Einbau eines langen, konischen Körpers in Verlängerung der Turbinennabe, eliminiert. Dadurch wird der Druckverlust minimiert und letztendlich sogar der Wirkungsgrad der Gasturbine verbessert.

Die Erfindung geht davon aus, dass die breitbandigen niederfrequenten Geräusche nicht durch Brennkammerresonanzen der Gasturbine erzeugt werden, da diese zwar eingeleitet werden könnten, aber in einem anderen Frequenzbereich liegen und Einzeltoncharakteristik besitzen müssten. Vielmehr haben Messungen vor Eintritt in die ersten Wärmetauscher von nachgeschalteten Abhitzekesseln das Nichtvorhandensein solcher niederfrequenten Schallanteile ergeben. Demnach kommt die hochturbulente Abgasströmung als Ursache in Betracht. Verschieden großskalige Wirbelablösungen der Strömung an Umlenkungen und Störungskanten erzeugen akustische Leistung, die noch durch Wellenreflexionen an der Kaminmündung (stehende Axialwellen) verstärkt werden.

Es ist dabei zweckmäßig, den aerodynamischen Körper auf der Nabe der Turbine anzubringen.

In einer anderen vorteilhaften Anordnung wird der Körper mit aerodynamisch geformten Streben im Abgaskanal befestigt. Hierdurch kann auf besonders einfache Weise und ohne in die Turbinenkonstruktion einzugreifen der Körper im Abgaskanal positioniert werden und zwar typischerweise so, dass Körper und Turbinenrotor zumindest annähernd koaxial sind.

Im Rahmen einer weiteren Ausführung ist die erfindungsgemäße Gasturbinenabgasanlage gekennzeichnet durch einen zusätzlichen Einlaufkonus im Kamin. Der Einlaufkonus ist dem aerodynamischen Körper nachgeschaltet und zeigt mit seinem geringsten Durchmesser stromaufwärts. Er kann dabei im Bereich des geringsten Durchmessers rotationssymmetrisch sein und mit dem aerodynamischen Körper auf einer Achse liegen. Er ist aerodynamisch so angepasst, dass die vom Abgaskanal einlaufende Abgasströmung vom Mantel des Konus in Richtung der Längsachse des Abgaskamins gelenkt wird. Wie im Abgaskanal soll auch hier die Strömung möglichst laminar geführt werden.

Als besonders vorteilhaft erweist es sich, Leitbleche als komplementäre Maßnahme zum Einlaufkonus im Bereich des Übergangs vom Abgaskanal zum Kamin bzw. im Bereich der Umlenkung des Abgasstroms in einem radial äußeren Bereich des Kamins anzubringen.

Weiterhin ist es vorteilhaft, mit einer Entdrallungsstufe Verwirbelungen und Querströmungen im Abgasstrom zu reduzieren und die Strömung des Abgases zu vergleichmäßigen. Eine Entdrallung kann beispielsweise auch durch entsprechend geformte Streben erfolgen, mit denen der Körper im Abgaskanal positioniert wird.

Da sie einen Druckverlust im System erzeugen, kann auf eine Vergleichmäßigung der Strömung durch den Einbau von Widerständen, z. B. Lochblechen, im ersten Ansatz verzichtet werden. Sie können aber ergänzt werden.

Das Abgassystem wird bezüglich niederfrequenten Schalls beherrschbar und planbar. Teure, weil "dicke" Abgaskulissen können eingespart werden. Durch die aerodynamische Optimierung wird der Druckverlust minimiert und der Wirkungsgrad der Gasturbinenanlage gesteigert.

Nachfolgend wird die Erfindung beispielhaft anhand der Zeichnungen näher erläutert. Es zeigen rein schematisch:
- Figur 1: eine Seitenansicht der erfinderischen Abgasanlage und
- Figur 2: eine Längssicht der erfinderischen Abgasanlage mit Blick in Strömungsrichtung

In den Figuren sind gleiche Teile mit gleichen Bezugszeichen versehen.

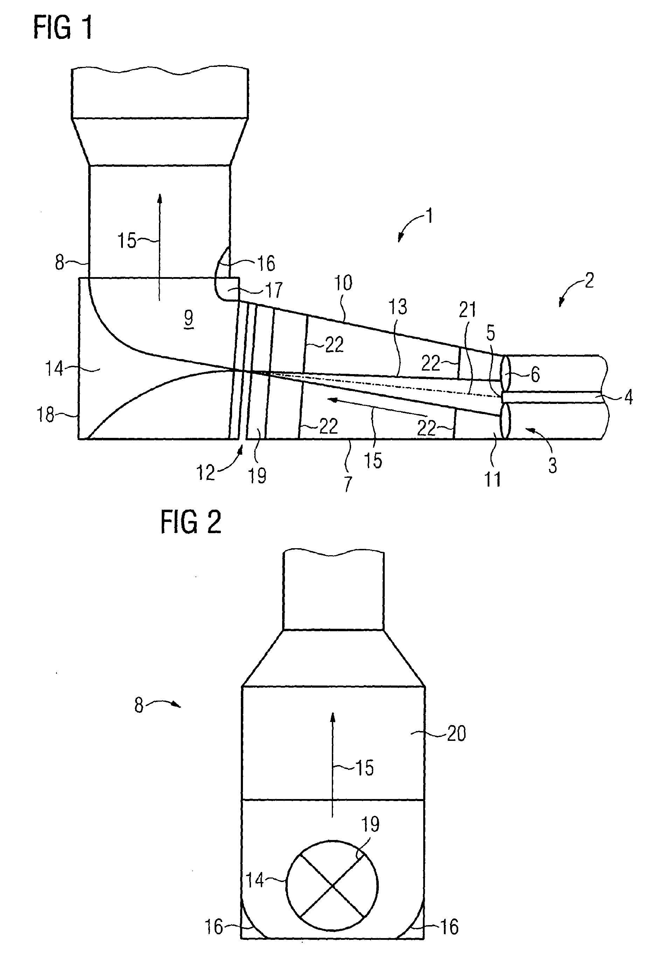

Die Figur 1 zeigt die Seitenansicht einer Abgasanlage 1, die einer Gasturbine 2 nachgeordnet ist. Die Gasturbine 2 umfasst einen Rotor 3 mit Welle 4, Nabe 5 und Laufrad 6. Die Abgasanlage 1 weist einen Abgaskanal 7 und einen Kamin 8 auf, die zusammen einen Strömungskanal 9 bilden. Der Abgaskanal 7 umfasst einen Diffusor 10, einen Eintritts- 11 und einen Austrittsbereich 12. Eine vom Eintrittsbereich 11 des Abgaskanals in den Abgaskanal 7 hineinragende aerodynamische Nabenverkleidung 13 ist konisch ausgebildet und auf der Längsachse 21 des Abgaskanals 7 angeordnet. Der Kamin 8 ist dem Abgaskanal 7 nachgeordnet und weist einen Einlaufkonus 14 auf, der im Bereich seines geringsten Durchmessers axialsymmetrisch ist und im Kamin 8 so angeordnet und dimensioniert ist, dass der Abgasstrom 15 möglichst frei von Turbulenzen vom Diffusor 10 in den Kamin 8 einströmen kann. Dies wird dadurch erreicht, dass die Spitze des Einlaufkonus 14 auf die Spitze der Nabenverkleidung 13 ausgerichtet ist, wobei Einlaufkonus 14 und Nabenverkleidung 13 mindestens annähernd koaxial sind.

Zur weiteren Verbesserung der Aerodynamik im Strömungskanal 9 sind Leitbleche 16 komplementär zum Einlaufkonus 14 an der Peripherie des Strömungskanals 9 an Stellen großer Umlenkung angeordnet, wie beispielsweise am Übergang 17 vom Abgaskanal 7 zum Kamin 8 und an der Rückwand 18 im unteren Teil des Kamins 8 (s. Fig. 2).

Eine weitere Vergleichmäßigung der Strömung wird durch eine im Strömungskanal angeordnete Entdrallungsstufe 19 erzielt, mit der tangentiale Geschwindigkeitsanteile der Abgasströmung in eine axiale Richtung umgelenkt werden. Entsprechend geformte Streben 22, die den aerodynamischen Körper im Abgaskanal positionieren, können diese Funktion erfüllen.

Die Strömungsrichtung des Abgases in der Abgasanlage ist mit Pfeilen 15 gekennzeichnet.

Figur 2 zeigt den Kamin 8 der Abgasanlage 1 von der Gasturbine 2 aus gesehen, mit einer Entdrallungsstufe 19 vor dem Einlaufkonus 14 und zwei Leitblechen 16, die vor der Rückwand 18 des Kamins 8 angebracht sind. Oberhalb des Einlaufkonus 14 im Kamin 8 befinden sich zusätzliche Schalldämpferkulissen 20. Der Abgasstrom 15 passiert die Entdrallungsstufe 19 im Austrittsbereich 12 des Abgaskanals 7 und wird vom Einlaufkonus 14 und den Leitblechen 16 in die Vertikale umgelenkt.

## Patentansprüche

1. Abgasanlage (1) umfassend einen Abgaskanal (7) mit einem Diffusor (10), einem Eintrittsbereich (11), einem Austrittsbereich (12) und einer Längsachse (21),
**dadurch gekennzeichnet, dass** ein vom Eintrittsbereich (11) des Abgaskanals (7) in den Abgaskanal (7) hineinragender aerodynamischer Körper (13) im Wesentlichen auf der Längsachse (21) angeordnet und derart ausgestaltet ist, dass beim Betrieb der Abgasanlage (1) die Entstehung niederfrequenten Schalls vermieden wird.

2. Die Abgasanlage (1) nach Anspruch 1, bei der der Körper (13) sich über mehr als die Hälfte des Abgaskanals (7) erstreckt.

3. Die Abgasanlage (1) nach Anspruch 1 oder 2, bei der der Körper (13) axialsymmetrisch ist.

4. Die Abgasanlage (1) nach einem der vorhergehenden Ansprüche, bei der der Körper (13) sich zum Austrittsbereichs (12) hin verjüngt.

5. Die Abgasanlage (1) nach einem der vorhergehenden Ansprüche, bei der der Körper (13) konisch ist.

6. Die Abgasanlage (1) nach einem der vorhergehenden Ansprüche, bei der der Körper (13) mit aerodynamisch geformten Streben (22) im Abgaskanal (7) befestigt ist.

7. Die Abgasanlage (1) nach einem der vorhergehenden Ansprüche, weiter umfassend einen an den Abgaskanal (7) anschließenden Kamin (8), wobei der Abgaskanal (7) und der Kamin (8) einen zusammenhängenden Strömungskanal (9) bilden.

8. Die Abgasanlage (1) nach Anspruch 7, bei der ein Einlaufkonus (14) im Kamin (8) angeordnet ist.

9. Die Abgasanlage (1) nach Anspruch 7 oder 8, bei der der Einlaufkonus (14) im Bereich seines geringsten Durchmessers und der Körper (13) koaxial sind.

10. Die Abgasanlage (1) nach einem der vorhergehenden Ansprüche, bei der Leitbleche (16) im Strömungskanal (9) angeordnet sind.

11. Die Abgasanlage (1) nach einem der vorhergehenden Ansprüche, mit einer Entdrallungsstufe (19).

12. Die Abgasanlage (1) nach Anspruch 8 oder 11, wobei die Entdrallungsstufe (19) zwischen dem Körper (13) und dem Einlaufkonus (14) angeordnet ist.

13. Eine Gasturbinenanlage, umfassend eine Gasturbine (2) und eine Abgasanlage (1) nach einem der vorhergehenden Ansprüche, wobei die Abgasanlage (1) der Gasturbine (2) abgasseitig nachgeschaltet ist.

14. Eine Gasturbinenanlage nach Anspruch 13, bei der eine Turbinenlängsachse und der Körper (13) mindestens annähernd koaxial sind.

15. Verfahren zum geräuscharmen Betrieb einer Abgasanlage (1) umfassend einen Abgaskanal (7) mit einem Diffusor (10), einem Eintrittsbereich (11), einem Austrittsbereich (12) und einer Längsachse (21),
**dadurch gekennzeichnet, dass** die Entstehung niederfrequenten Schalls durch einen vom Eintrittsbereich (11) des Abgaskanals (7) in den Abgaskanal (7) hineinragenden aerodynamischen Körper (13), der im Wesentlichen auf der Längsachse (21) angeordnet ist, vermieden wird.
